# FASCICULE DE BREVET EUROPEEN

(11) **EP 2 937 026 B1**
(45) Date de publication et mention de la délivrance du brevet: **08.05.2019**
(21) Numéro de dépôt: 15164729.4
(22) Date de dépôt: 22.04.2015
(51) Int. Cl.: A47J 27/08

(54) **APPAREIL DE CUISSON SOUS PRESSION A ORGANE DE COMMANDE MANUEL RELEVABLE**
UNTERDRUCK-KOCHGERÄT MIT MANUELL HOCHKLAPPBAREM STEUERORGAN
PRESSURE-COOKING APPLIANCE WITH RAISABLE MANUAL CONTROL MEMBER

(30) Priorité: 23.04.2014 FR 1453631
(43) Date de publication de la demande: 28.10.2015
(73) Titulaire: SEB S.A., 69130 Ecully (FR)
(72) Inventeur: Chameroy, Eric, 21260 VERONNES (FR); Cartigny, Michel, Pierre, 21310 MIREBEAU (FR)
(74) Mandataire: Weber, Jean-François

(56) Documents cités:
- EP-A1- 2 759 233
- WO-A1-2006/056253
- CN-A- 103 300 715
- FR-A1- 2 910 795

## Description

La présente invention se rapporte au domaine technique général des appareils de cuisson sous pression, et en particulier des appareils domestiques du genre autocuiseurs, comprenant une cuve et un couvercle destiné à être verrouillé sur la cuve pour former une enceinte de cuisson suffisamment étanche pour monter en pression, lesdits appareils étant destinés à assurer la cuisson sous pression de vapeur d'aliments contenus dans la cuve.

La présente invention concerne plus particulièrement un appareil de cuisson d'aliments sous pression comprenant une cuve, un couvercle destiné à être associé à la cuve, un dispositif de verrouillage/déverrouillage du couvercle relativement à la cuve solidaire du couvercle et conçu pour se déplacer relativement à ce dernier selon un mouvement d'expansion/rétractation présentant au moins une composante radiale, et un organe de commande manuel du verrouillage/déverrouillage conçu pour commander ledit mouvement d'expansion/rétractation, ledit organe de commande manuel étant monté mobile relativement au couvercle de façon à pouvoir adopter au moins une position relevée qui correspond au déverrouillage du couvercle et dans laquelle l'organe de commande manuel s'élève au droit du couvercle et au moins une première position rabattue qui correspond au verrouillage du couvercle et dans laquelle l'organe de commande manuel est rabaissé vers le couvercle.

Les appareils de cuisson d'aliments sous pression, également appelés *« autocuiseurs* », sont bien connus de longue date. Ils comprennent généralement une cuve et un couvercle destiné à être verrouillé sur la cuve par l'intermédiaire d'un dispositif de verrouillage / déverrouillage susceptible d'évoluer entre une configuration de verrouillage du couvercle et une configuration de déverrouillage. Un tel dispositif de verrouillage / déverrouillage met par exemple en oeuvre une paire de mâchoires de verrouillage solidaires de bras entraîneurs disposés radialement sur le couvercle et dont le déplacement est commandé par un organe de commande manuel monté sur le couvercle.

L'utilisateur peut ainsi actionner l'organe de commande pour assurer le déplacement radial des mâchoires, soit en direction centrifuge, soit en direction centripète, pour positionner les mâchoires respectivement en position de déverrouillage ou en position de verrouillage.

On connaît en particulier un autocuiseur dont l'organe de commande est constitué par une anse montée à pivotement sur le couvercle selon un axe de rotation horizontal, ladite anse étant conçue pour se déplacer selon une course angulaire de 90° entre une position rabattue qui commande le verrouillage des mâchoires et une position déployée qui commande le déverrouillage des mâchoires. Cet autocuiseur de l'art antérieur, qui donne globalement satisfaction, pourrait néanmoins être encore perfectionné, notamment sur le plan du confort et de la simplicité d'utilisation. Il existe en outre un risque, certes relativement marginal *a priori* mais pas forcément totalement inexistant, que l'utilisateur cherche à verrouiller le couvercle en tentant de rabattre par erreur l'anse du mauvais côté. Une telle erreur d'utilisation pourrait conduire à solliciter le mécanisme de transformation de mouvement reliant l'anse aux mâchoires de manière impropre, et entraîner dans le pire des cas une dégradation dudit mécanisme. De ce point de vue, cet autocuiseur connu pourrait être considéré par certains comme souffrant d'un léger défaut d'ergonomie. De plus, cette conception de l'organe de commande est relativement limitative en matière de pilotage de l'autocuiseur, notamment en comparaison avec d'autres conceptions d'autocuiseur qui permettent, à partir d'un bouton rotatif unique, de piloter de multiples fonctions de l'autocuiseur.

Le document CN-103300715 décrit un appareil de cuisson pourvu de deux poignées reliées entre elles par un système à engrenage.

Les objets assignés à l'invention visent en conséquence à porter remède aux divers inconvénients énumérés précédemment et à proposer un nouvel appareil de cuisson d'aliments sous pression qui, tout en étant de construction particulièrement simple, compacte et bon marché, est particulière ergonomique, fiable et robuste.

Un autre objet de l'invention vise à proposer un nouvel appareil de cuisson d'aliments sous pression qui limite considérablement, voire annule, le risque de voir un utilisateur soulever l'ensemble de l'appareil par le couvercle.

Un autre objet de l'invention vise à proposer un nouvel appareil de cuisson d'aliments sous pression particulièrement pratique à utiliser.

Un autre objet de l'invention vise à proposer un nouvel appareil de cuisson d'aliments sous pression particulièrement ergonomique et limitant les risques de voir le couvercle échapper à la prise de l'utilisateur.

Un autre objet de l'invention vise à proposer un nouvel appareil de cuisson d'aliments sous pression dont la conception permet de limiter les erreurs d'utilisation.

Un autre objet de l'invention vise à proposer un nouvel appareil de cuisson d'aliments sous pression dont le fonctionnement est particulièrement sûr pour l'utilisateur.

Les objets assignés à l'invention sont atteints à l'aide d'un appareil de cuisson d'aliments sous pression selon la revendication 1.

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :

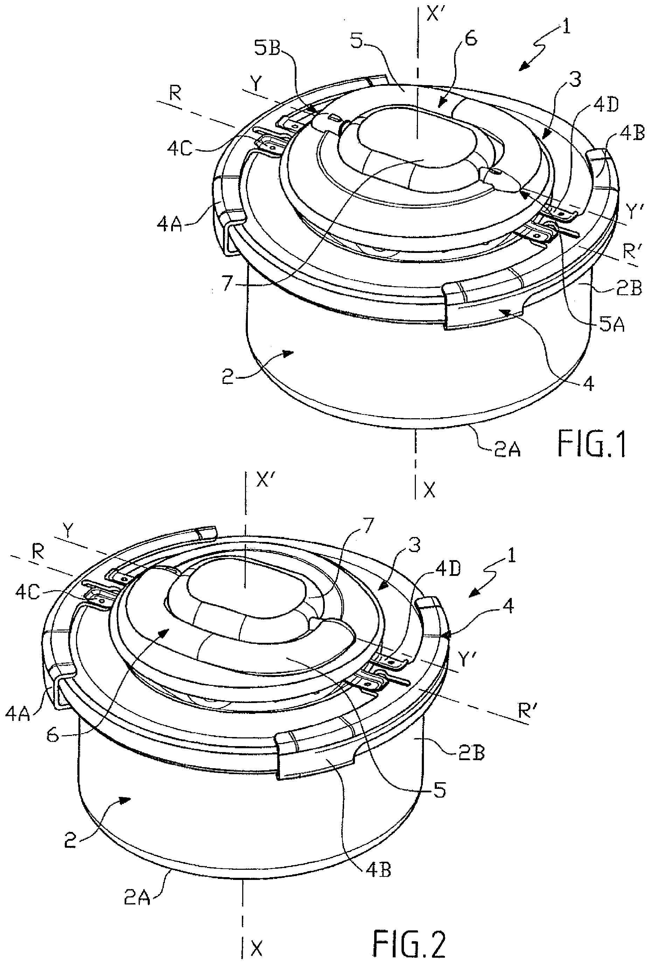

- La figure 1 illustre, selon une vue générale en perspective, un appareil de cuisson d'aliments sous pression à mâchoires de verrouillage conforme à l'invention dont le couvercle est verrouillé sur la cuve et dont l'organe de commande du verrouillage/déverrouillage (formé en l'espèce par une anse rotative) occupe la première position rabattue.
- La figure 2 illustre, selon une vue générale en perspective, l'appareil illustré à la figure 1 dont le couvercle est également verrouillé sur la cuve et dont l'organe de commande (formé en l'espèce par une anse rotative) occupe une deuxième position rabattue, qui est séparée en l'espèce de la première position rabattue de la figure 1 par un secteur angulaire d'environ 180°.

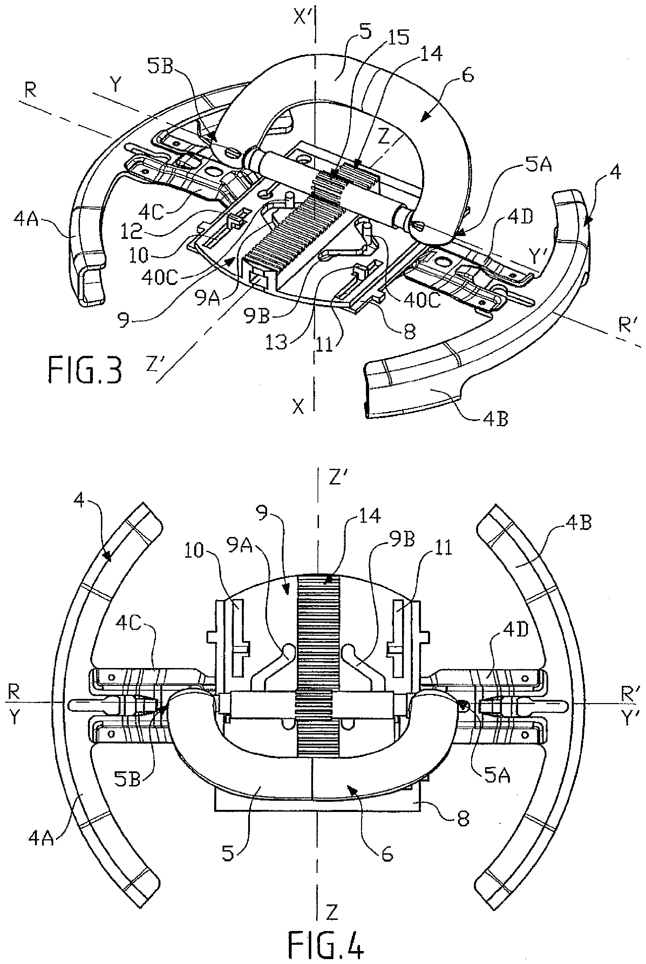

- La figure 3 illustre, selon une vue en perspective, un détail de réalisation de l'appareil des figures 1 et 2 qui inclut le dispositif de verrouillage/déverrouillage et l'organe de commande, ce dernier se trouvant dans une position intermédiaire entre la première position rabattue (correspondant au verrouillage complet) et la position relevée (correspondant au déverrouillage complet), de sorte que le dispositif de verrouillage/déverrouillage à mâchoires se trouve lui-même dans une position intermédiaire entre ses positions de verrouillage complet et de déverrouillage complet.
- La figure 4 illustre, selon une vue de dessus, le détail de réalisation de la figure 3.

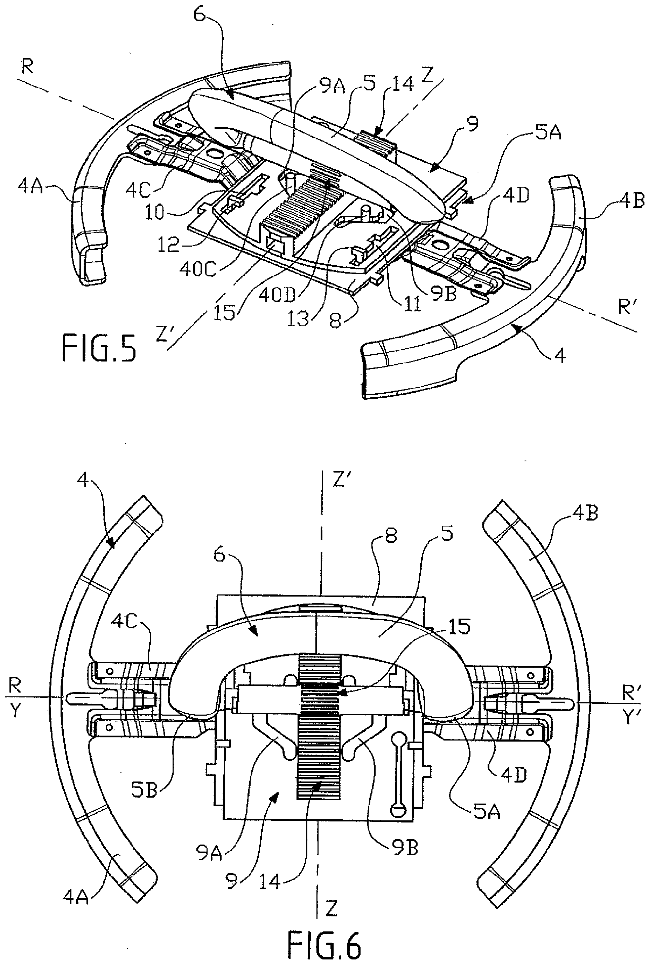

- La figure 5 illustre, selon une vue en perspective, le détail de réalisation des figures 3 et 4 avec l'organe de commande qui se trouve cette fois dans une position intermédiaire entre la deuxième position rabattue de verrouillage complet et la position relevée de déverrouillage complet, de sorte que le dispositif de verrouillage/déverrouillage à mâchoires se trouve lui-même dans une position intermédiaire entre ses positions de verrouillage complet et déverrouillage complet.
- La figure 6 illustre, selon une vue de dessus, le détail de réalisation de la figure 5.

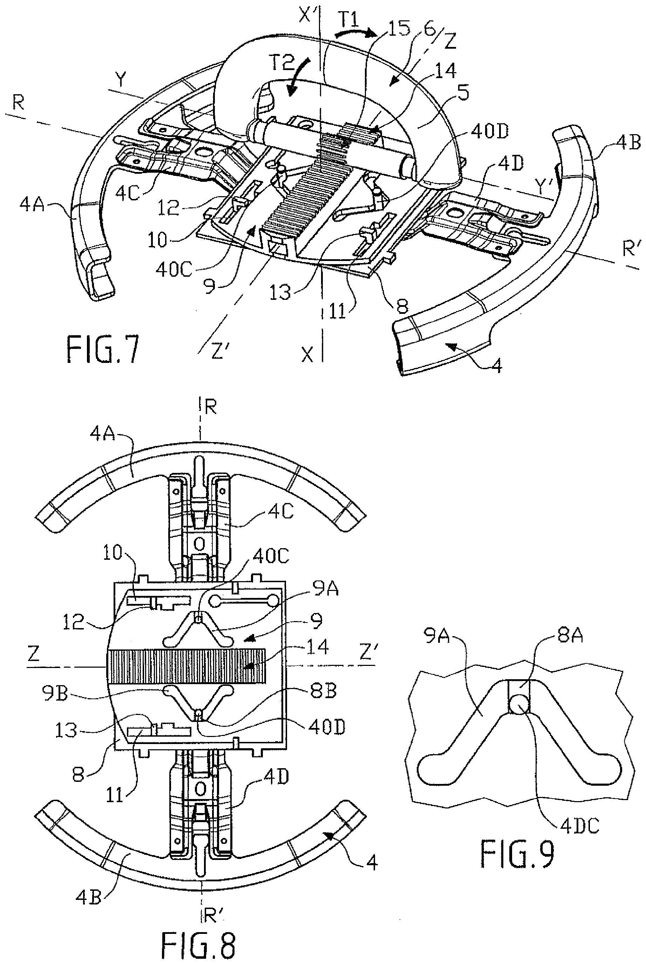

- La figure 7 illustre, selon une vue en perspective, le détail de réalisation des figures 3 à 6 avec l'organe de commande qui se trouve cette fois dans sa position relevée, de sorte que le dispositif de verrouillage/déverrouillage à mâchoires se trouve lui-même dans une position de déverrouillage complet.
- La figure 8 illustre, selon une vue de dessus, le détail de réalisation de la figure 7, l'organe de commande étant omis par souci de clarté.
- La figure 9 illustre un détail agrandi de la figure 8.

L'appareil 1 de cuisson d'aliments sous pression conforme à l'invention est destiné à assurer la cuisson de différents aliments à un niveau de pression supérieur à la pression atmosphérique, de préférence dans un contexte domestique, étant entendu que l'invention peut également concerner des appareils professionnels ou semi-professionnels. L'appareil 1 conforme à l'invention est donc avantageusement un ustensile de cuisine présentant un caractère portatif (c'est-à-dire qu'il peut être déplacé manuellement) et indépendant. L'appareil 1 conforme à l'invention est conçu pour monter en pression exclusivement sous l'effet d'une source de chauffe (embarqué ou externe), sans apport de pression externe. De façon particulièrement préférentielle, l'appareil 1 de cuisson conforme à l'invention est un autocuiseur.

L'appareil 1 de cuisson sous pression conforme à l'invention comprend une cuve 2 formant récipient de cuisson et présentant avantageusement sensiblement une symétrie de révolution selon un axe central X-X'. Par la suite, l'adjectif « *axial* » se réfèrera à la direction de cet axe central de symétrie X-X', direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable, et est par exemple pourvu d'un fond thermo-conducteur 2A solidarisé à la cuve par toute technique appropriée (par exemple par frappe à chaud). La cuve 2 peut comporter également des organes de préhension, tel que des poignées de cuve (non représentées) préférentiellement au nombre de deux, et fixées sur la paroi latérale 2B de la cuve de façon diamétralement opposée par exemple. Ladite paroi latérale 2B présente un bord supérieur libre, qui délimite l'ouverture d'accès à l'intérieur de la cuve 2. Ce bord supérieur libre est avantageusement un bord roulé, recourbé sur lui-même, comme cela est bien connu en tant que tel. L'appareil 1 conforme à l'invention comprend également un couvercle 3 destiné à être associé à la cuve 2, pour former en l'occurrence une enceinte de cuisson capable de monter en pression. Dans le mode de réalisation illustré aux figures, le couvercle 3 est conçu pour être rapporté et verrouillé sur la cuve 2, afin de former avec cette dernière une enceinte de cuisson sensiblement étanche, c'est-à-dire suffisamment hermétique pour permettre la montée en pression de l'appareil 1. Le couvercle 3 est donc conçu, dans le mode de réalisation illustré aux figures, pour coiffer hermétiquement la cuve 2. Afin d'obtenir ce caractère hermétique, l'appareil 1 inclut avantageusement une garniture d'étanchéité (tel qu'un joint annulaire souple, en élastomère par exemple) destiné à être interposé entre le couvercle 3 et la cuve 2 lorsque le couvercle 3 est associé à la cuve 2 pour former l'enceinte de cuisson. Le couvercle 3 est avantageusement de forme conjuguée à celle de la cuve 2, par exemple de forme générale discoïde, et s'étend avantageusement dans un plan moyen sensiblement parallèle au plan moyen d'extension du fond 2A de la cuve 2 (c'est-à-dire un plan horizontal en l'espèce) lorsqu'il est rapporté et verrouillé sur cette dernière. L'appareil 1 de cuisson d'aliments sous pression conforme à l'invention comprend avantageusement un moyen de régulation de pression (non illustré) monté de préférence sur le couvercle 3 et agencé pour maintenir la pression relative (c'est-à-dire la pression mesurée au-dessus de la pression atmosphérique) régnant dans l'enceinte à une valeur prédéterminée sensiblement constante, dite pression de fonctionnement. Le principe de fonctionnement général d'un tel moyen de régulation de pression est bien connu de l'homme du métier, de sorte qu'il n'est pas nécessaire de le décrire plus avant ici. Avantageusement, le moyen de régulation de pression 5 est conçu pour que la pression de fonctionnement soit comprise dans une plage s'étendant sensiblement entre 10 et 120 kPa, et soit de préférence de l'ordre de 100 kPa.

L'appareil 1 conforme à l'invention comprend donc un dispositif de verrouillage/déverrouillage 4 du couvercle 3 relativement à la cuve 2. Le verrouillage du couvercle 3 sur la cuve 2 permet à l'enceinte de cuisson formée par l'association du couvercle 3 et de la cuve 2 de monter en pression sans risque de voir le couvercle 3 échapper sous l'effet de la pression. Le dispositif de verrouillage / déverrouillage 4 peut ainsi évoluer entre une position de verrouillage du couvercle 3 relativement à la cuve 2, dans laquelle le couvercle 3 est solidarisé à la cuve 2, et une position de déverrouillage du couvercle 3 relativement à la cuve 2, dans laquelle le couvercle 3 peut être librement séparé de la cuve 2. Comme illustré aux figures, le dispositif de verrouillage/déverrouillage 4 est solidaire du couvercle 3, c'est-à-dire qu'il est attaché audit couvercle 3, et même en l'espèce supporté par ce dernier. Le dispositif de verrouillage / déverrouillage 4 est conçu pour se déplacer relativement au couvercle 3 selon un mouvement d'expansion/rétractation présentant au moins une composante radiale. De préférence, ledit mouvement d'expansion/rétractation est majoritairement radial, et de façon encore plus préférentielle sensiblement purement radial, comme dans l'exemple illustré aux figures. En l'espèce le dispositif de verrouillage / déverrouillage 4 est monté mobile relativement au couvercle 3 de façon à pouvoir évoluer entre au moins une position de verrouillage (illustrée aux figures 1 et 2), qui correspond dans l'exemple illustré aux figures à une configuration d'expansion maximale du dispositif de verrouillage / déverrouillage 4, et une position de déverrouillage (illustrée aux figures 7 et 8), qui correspond dans l'exemple illustré aux figures à une configuration de rétractation maximale du dispositif de verrouillage / déverrouillage 4. Par « *mouvement d'expansion*/*rétractation »*, on désigne ici un mouvement opéré par le dispositif de verrouillage/déverrouillage 4 et qui permet à ce dernier de présenter un encombrement « *hors-tout* » variable, c'est-à-dire plus ou moins important (avec de préférence un encombrement minimal en position rétractée et un encombrement maximal en position expansée). Le mouvement en question présente au moins une composante radiale, ce qui signifie en l'espèce que le dispositif de verrouillage / déverrouillage 4 est conçu pour se déplacer au moins selon la direction radiale R-R', en considération de l'axe central vertical X-X' (qui est avantageusement un axe de symétrie pour la cuve 2 lorsque cette dernière présente une forme de révolution, come exposé auparavant). Dans l'exemple préférentiel illustré aux figures, la direction radiale R-R' correspond à une direction horizontale qui croise avantageusement l'axe central X-X' de l'appareil 1. Bien entendu, le fait que ledit mouvement d'expansion/rétractation présente une composante radiale n'exclut absolument pas qu'il puisse également présenter, en plus de cette composante radiale (préférentiellement majoritaire), d'autres composantes non radiales (par exemple verticale, tangentielle, etc.) préférentiellement minoritaires. Le mouvement d'expansion/rétractation correspond donc à un déplacement du dispositif de verrouillage / déverrouillage 4 qui peut être représenté par un vecteur présentant en l'espèce au moins une composante radiale. Ceci exclut donc notamment par exemple que le mouvement d'expansion / rétractation soit purement vertical par exemple (auquel cas il ne présenterait pas de composante radiale). De préférence, comme illustré aux figures, le mouvement d'expansion / rétractation est sensiblement purement radial, c'est-à-dire qu'il ne présente dans ce cas qu'une seule composante qui est radiale. Dans ce mode de réalisation avantageux, le dispositif de verrouillage / déverrouillage 4 est donc avantageusement conçu pour se déplacer selon un mouvement d'expansion /rétractation radial, qui permet de faire en l'occurrence varier l'encombrement radial (selon la direction radiale R-R') du dispositif de verrouillage / déverrouillage 4, lequel évolue ainsi entre un encombrement radial maximal (position de déverrouillage illustrée aux figures 7 et 8) et un encombrement radial minimal (position de verrouillage illustrée aux figures 1 et 2).

Le dispositif de verrouillage / déverrouillage 4 peut par exemple être formé par un dispositif de verrouillage / déverrouillage à mâchoires (comme illustré aux figures) ou à segments, étant entendu que l'invention n'est nullement limitée à un type particulier de dispositif. Dans la variante préférentielle illustrée aux figures, le dispositif de verrouillage / déverrouillage 4 du couvercle 3 relativement à la cuve 2 comprend au moins une, et de préférence deux, mâchoire(s) 4A, 4B montée(s) mobile(s), de préférence en translation radiale (en l'occurrence selon la direction radiale R-R'), relativement au couvercle 3, par exemple par l'intermédiaire de bras entraîneurs correspondants 4C, 4D s'étendant avantageusement de façon diamétralement opposée en regard de l'axe central X-X' de l'appareil 1. Les mâchoires 4A, 4B sont ainsi montées, par l'intermédiaire des bras entraîneurs 4C, 4D, entre d'une part une position de verrouillage dans laquelle chaque mâchoire 4A, 4B enserre le couvercle 3 et le bord supérieur roulé de la cuve 2 et d'autre part une position de déverrouillage, obtenue par déplacement centrifuge simultanée des mâchoires 4A, 4B à partir de leur position de verrouillage, et dans laquelle les mâchoires 4A, 4B ne sont plus en prise avec le bord roulé de la cuve 2, ce qui permet à l'utilisateur de désolidariser librement le couvercle 3 de la cuve 2. La position de verrouillage peut être ou non une position de rappel, un tel effet de rappel étant obtenu par exemple grâce à l'interposition d'un ressort reliant les bras entraîneurs 4C, 4D et rappelant ces derniers l'un vers l'autre. Chaque mâchoire 4A, 4B est de préférence réalisée en un matériau métallique (acier par exemple) et présente avantageusement un profil « *en U* » destiné à venir enserrer localement, en position de verrouillage, à la fois le bord périphérique du couvercle 3 et le bord roulé de la cuve 2. Chaque bras entraîneur 4C, 4D s'étend plus précisément entre une extrémité intérieure destinée à coopérer avec un mécanisme de commande du verrouillage / déverrouillage (décrit ci-après) et une extrémité extérieure qui porte la mâchoire correspondante 4A, 4B. Il est cependant tout à fait envisageable que l'extrémité extérieure de chaque segment 4C, 4D ne porte pas de mâchoire et soit simplement destinée à pénétrer dans des lumières correspondantes ménagées dans la cuve (par exemple à travers l'épaisseur de la paroi latérale 2B, à la manière d'un système pêne/gâche. Un tel système de verrouillage de type pêne/gâche (non illustré) est habituellement désigné sous l'appellation « *système de verrouillage à segments* ».

Ainsi, l'appareil 1 selon l'invention met préférentiellement en oeuvre un verrou monté à translation radiale sur le couvercle 3, ledit verrou étant formé par exemple par une ou plusieurs mâchoires et/ou un ou plusieurs segments, comme exposé ci-avant.

L'appareil de cuisson d'aliments 1 conforme à l'invention comprend également un organe de commande manuel 6 du verrouillage / déverrouillage du couvercle 3 relativement à la cuve 2. Plus précisément, l'organe de commande manuel 6 du verrouillage/déverrouillage est conçu pour commander ledit mouvement d'expansion/rétractation. L'organe de commande manuel 6 est en l'occurrence conçu pour être manipulé par l'utilisateur de façon à lui permettre de contrôler le moyen de verrouillage / déverrouillage 4, et de préférence le déplacement radial de ce dernier (c'est-à-dire en l'espèce des bras entraîneurs 4C, 4D et des mâchoires correspondantes 4A, 4B). L'organe de commande manuel 6 est monté mobile relativement au couvercle 3, de préférence sur ce dernier, de façon à pouvoir adopter ;
- au moins une position relevée (figure 7) qui correspond au déverrouillage (et plus précisément en l'espèce au déverrouillage complet) du couvercle 3 et dans laquelle l'organe de commande manuel 6 s'élève au droit du couvercle 3, comme illustré à la figure 7,
- et au moins une première position rabattue (illustrée par la figure 1) qui correspond au verrouillage du couvercle 3 et dans laquelle l'organe de commande manuel 6 est rabaissé vers le couvercle 3.

La position relevée est donc une position déployée qui permet avantageusement à un utilisateur de saisir aisément l'organe de commande manuel 6 en vue de manipuler le couvercle 3 et/ou de rabattre l'organe de commande manuel 6 vers sa première position rabattue pour verrouiller le couvercle 3 relativement à la cuve 2. Avantageusement, dans sa position relevée, l'organe de commande manuel 6 s'étend à partir du couvercle 3 selon une direction moyenne majoritairement perpendiculaire au plan moyen d'extension du couvercle 3, ladite direction moyenne en question étant avantageusement la direction verticale, matérialisée par l'axe central X-X', tandis que dans sa première position rabattue, ledit organe de commande manuel 6 s'étend à partir du couvercle 3 selon une direction moyenne majoritairement parallèle au plan moyen d'extension du couvercle 3, qui correspond en l'espèce sensiblement au plan horizontal, de sorte que le passage de la première position rabattue à la position relevée correspond sensiblement à une course angulaire d'un quart de cercle (90°), comme illustré aux figures. De préférence, comme illustré aux figures, l'organe de commande manuel 6 est conçu pour être plus difficile à saisir manuellement dans sa première position rabattue qu'il ne l'est dans sa position relevée, afin de dissuader, sinon d'empêcher, un utilisateur de manipuler le couvercle 3 au moyen de l'organe de commande 6 lorsque le couvercle 3 est verrouillé sur la cuve 2, ce qui contribue notamment à éviter tout déverrouillage intempestif susceptible de conduire à la séparation brutale de la cuve 2 du couvercle 3. De façon encore plus préférentielle, l'organe de commande manuel 6 est, lorsqu'il se trouve dans ladite première position rabattue, sensiblement impossible à saisir manuellement pour manipuler le couvercle 3. En d'autres termes, dans ce mode de réalisation particulièrement avantageux, l'utilisateur de l'appareil 1 est dans l'impossibilité pratique de se servir de l'organe de commande manuel 6 comme d'un organe de préhension du couvercle 3, du moins tant que l'organe de commande manuel 6 se trouve dans sa première position rabattue.

L'organe de commande manuel 6 est donc conçu pour pouvoir être déplacé manuellement par un utilisateur entre au moins sa position relevée et sa première position rétractée, et vice-versa. L'organe de commande manuel 6 interagit, au moyen d'un mécanisme qui sera décrit plus en détail ci-après, avec le dispositif de verrouillage/déverrouillage 4 pour que lorsque l'organe de commande 6 adopte sa position relevée, le dispositif de verrouillage/déverrouillage 4 se trouve en position de déverrouillage, c'est-à-dire que le couvercle 3 peut être librement rapporté sur, et enlevé de, la cuve 2, tandis que lorsque l'organe de commande manuel 6 se trouve dans sa première position rabattue, le dispositif de verrouillage/déverrouillage 4 adopte alors sa position de verrouillage en empêchant la désolidarisation du couvercle 3 et de la cuve 2. Le déplacement de l'organe de commande 6 de sa position relevée jusqu'à sa première position rabattue commande donc le déplacement (de préférence concomitant) du dispositif de verrouillage/déverrouillage 4 de sa position de déverrouillage à sa position de verrouillage. Réciproquement, le déplacement de l'organe de commande manuel 6 de sa première position rabattue à sa position relevée commande le déplacement (de préférence concomitant) du dispositif de verrouillage/déverrouillage 4 de sa position de verrouillage à sa position de déverrouillage. Plus précisément, l'appareil 1 de cuisson est avantageusement conçu pour que le déplacement de l'organe de commande manuel 6 de ladite position relevée jusqu'à ladite première position rabattue commande le verrouillage du couvercle 3 par rétractation du dispositif de verrouillage/déverrouillage 4 et pour que le déplacement de l'organe de commande manuel 6 de ladite première position rabattue jusqu'à ladite disposition relevée commande le déverrouillage du couvercle 3 par expansion du dispositif de verrouillage/déverrouillage 4. Le déplacement opéré par l'organe de commande manuel 6 est donc transformé en un mouvement d'expansion/rétractation du dispositif de verrouillage/déverrouillage 4. Dans le mode de réalisation avantageux illustré aux figures, l'organe de commande manuel 6 est monté à pivotement relativement au couvercle 3, de préférence selon un axe de pivotement Y-Y' sensiblement horizontal, qui est en l'espèce avantageusement parallèle à la direction radiale R-R'. L'invention n'est cependant pas limitée à un tel montage purement rotatif, et il est parfaitement envisageable de prévoir par exemple, à titre alternatif, un organe de commande manuel monté à translation, ou à rotation et translation.

Comme illustré aux figures, le dispositif de verrouillage/déverrouillage 4 est conçu pour se déplacer selon ledit mouvement d'expansion/rétractation entre deux positions extrêmes, illustrées respectivement aux figures 7 et 8 d'une part et 1 et 2 d'autre part, savoir une position d'expansion maximale, dans laquelle le déploiement du dispositif de verrouillage/déverrouillage 4 est maximal, de sorte qu'en l'espèce l'écartement entre les mâchoires 4A, 4B est maximal, et une position de rétractation maximale dans laquelle l'encombrement radial du dispositif de verrouillage/déverrouillage 4 est minimal, de sorte que l'écartement entre les mâchoires 4B, 4B est minimal. Ledit dispositif de verrouillage/déverrouillage 4 est conçu pour se trouver dans ladite position d'expansion maximale lorsque l'organe de commande manuel 6 et dans ladite position relevée, et pour se trouver dans ladite position de rétractation maximale lorsque l'organe de commande manuel 6 est dans ladite première position rabattue. La position d'expansion maximale correspond en l'espèce au déverrouillage complet du couvercle 3 relativement à la cuve 2, tandis que la position de rétractation maximale correspond au verrouillage complet du couvercle 3 relativement à la cuve 2 (illustrée aux figures 1 et 2).

Afin d'améliorer encore la sécurité et le confort d'utilisation, la position relevée est une position stable, de sorte que l'organe de commande manuel 6 a tendance à demeurer spontanément en position relevée une fois qu'il a atteint cette dernière, en l'absence de sollicitation manuelle de l'organe de commande manuel 6 par l'utilisateur. La première position rabattue est elle aussi de préférence une position stable pour sécuriser le verrouillage et éviter tout déverrouillage intempestif, qui ne résulterait pas d'une manipulation positive de l'organe de commande manuel 6.

Avantageusement, la première position rabattue est une position de butée. Cette caractéristique contribue notamment au caractère particulièrement ergonomique de l'appareil 1 conforme au mode de réalisation illustré aux figures. En effet, grâce à cette caractéristique l'utilisateur sait intuitivement que la mise en butée de l'organe de commande manuel 6, dans la première position rabattue, correspond au verrouillage complet de l'appareil.

En revanche, comme illustrée aux figures, la position relevée n'est pas une position de butée. L'organe de commande manuel 6 est donc conçu pour pouvoir se déplacer, à partir de sa position relevée, selon au moins une première et une deuxième trajectoires T1, T2 différentes, ladite première trajectoire T1 menant à ladite première position rabattue. En d'autres termes, l'organe de commande 6 peut, à partir de sa position relevée, se déplacer soit selon la première trajectoire T1 soit selon la deuxième trajectoire T2, c'est-à-dire qu'il peut se déplacer selon au moins une première et une deuxième trajectoires T1, T2 différentes et alternatives (c'est-à-dire que l'organe de commande 6 ne peut pas se déplacer simultanément selon à la fois les première et deuxième trajectoires, qui présentent un caractère alternatif, mais selon l'une ou l'autre desdites trajectoires). Comme illustré aux figures, la position relevée ne constitue pas une position d'arrêt final pour l'organe de commande manuel 6, qui peut soit retourner dans sa première position rabattue, en suivant un chemin correspondant à la trajectoire T1, mais également suivre un chemin alternatif, correspondant à la deuxième trajectoire T2, qui ne mène pas quant à lui vers la première position rabattue. Le caractère différent desdites première et deuxième trajectoires T1, T2 peut résulter par exemple du fait que lesdites première et deuxième trajectoires T1, T2 présentent des sens/ou directions respectifs différents. Grâce à cette caractéristique technique, l'utilisateur de l'appareil 1 conforme à l'invention a le choix, une fois qu'il a placé l'organe de commande manuel 6 en position relevée, entre au moins les deux options suivantes : soit rabattre l'organe de commande manuel 6 dans sa première position rabattue, en le sollicitant manuellement pour qu'il suive la première trajectoire T1, soit emmener manuellement l'organe de commande manuel 6 selon la deuxième trajectoire T2, de préférence jusqu'à une position terminale (position de butée) qui est totalement distincte de ladite première position rabattue.

L'organe de commande manuel 6 est monté mobile relativement au couvercle 3 de façon à pouvoir adopter, outre ladite position relevée et ladite première position rabattue évoquée précédemment, une deuxième position rabattue dans laquelle l'organe de commande manuel 6 est rabaissé vers le couvercle 3, ladite deuxième position rabattue étant différente de ladite première position rabattue, ladite deuxième trajectoire T2 menant à ladite deuxième position rabattue. Dans ce cas, l'organe de commande 6 peut donc, à partir de sa position relevée (figure 7), soit être amené dans la première position rabattue (figure 1), soit être amené dans la deuxième position rabattue (figure 2). De préférence, la deuxième position rabattue est une position de butée, ce qui facilite l'ergonomie de l'appareil 1 en signalant de façon intuitive à l'utilisateur l'atteinte de ladite deuxième position rabattue. La deuxième position rabattue est avantageusement une position stable de sorte que l'organe de commande manuel 6 a tendance à spontanément rester dans la deuxième position rabattue une fois qu'il a atteint cette dernière et sauf sollicitation contraire exercée manuellement par un utilisateur.

La deuxième position rabattue correspond elle aussi au verrouillage du couvercle 3. Dans ce mode de réalisation avantageux illustré aux figures, l'utilisateur pourra verrouiller le couvercle 3 relativement à la cuve 2 en amenant l'organe de commande manuel 6 soit dans sa première position rabattue soit dans sa deuxième position rabattue. Un tel montage symétrique s'avère particulièrement pratique et ergonomique, puisque l'utilisateur n'a pas besoin de se rappeler quelle position, parmi la première position rabattue et la deuxième position rabattue, correspond au verrouillage.

La deuxième position rabattue présente avantageusement des caractéristiques sensiblement similaires à celles de la première position rabattue. En particulier, l'organe de commande manuel 6 est, lorsqu'il se trouve dans ladite deuxième position rabattue, sensiblement plus difficile à saisir manuellement pour manipuler le couvercle 3 qu'il ne l'est en position relevée. De façon encore plus préférentielle, l'organe de commande manuel 6 est, lorsqu'il se trouve dans ladite deuxième position rabattue, sensiblement impossible à saisir manuellement pour manipuler le couvercle 3.

Ainsi, dans le mode de réalisation préférentiel illustré aux figures, l'appareil 1 est conçu pour que le déplacement de l'organe de commande manuel 6 de ladite position relevée jusqu'à ladite première position rabattue (selon la trajectoire T1) ou jusqu'à ladite deuxième position rabattue (selon la trajectoire T2) commande le verrouillage du couvercle 3 par rétractation du dispositif de verrouillage/déverrouillage 4 et pour que réciproquement le déplacement de l'organe de commande manuel 6 de ladite première position rabattue ou de ladite deuxième position rabattue jusqu'à ladite position relevée (selon des trajectoires respectives de préférence identiques aux première et deuxième trajectoires T1, T2, mais de sens opposés) commande le déverrouillage du couvercle 3 par expansion du dispositif de verrouillage/déverrouillage 4. Bien entendu, l'invention n'est absolument pas limitée à la mise en oeuvre d'une deuxième position rabattue correspondant au verrouillage de l'appareil 1. Il est par exemple tout à fait envisageable, sans pour autant que l'on sorte du cadre de l'invention, que l'atteinte, par l'organe de commande manuel 6, de la deuxième position rabattue, commande une toute autre fonction que le verrouillage, ou corresponde par exemple simplement à une position de rangement permettant de réduire l'encombrement de l'organe de commande manuel 6 y compris lorsque le dispositif de verrouillage/déverrouillage 4 est en position de verrouillage.

Dans le mode de réalisation particulièrement avantageux illustré aux figures, selon lequel l'organe de commande manuel 6 est monté à pivotement relativement au couvercle 3, en l'espèce selon un axe de pivotement Y-Y' sensiblement horizontal, les première et deuxième trajectoires T1, T2 sont avantageusement des rotations (en l'occurrence selon l'axe de pivotement Y-Y') de sens opposés. Avantageusement, dans le mode de réalisation préférentiel illustré aux figures, l'organe de commande manuel 6 est conçu pour pivoter selon une course angulaire correspondant sensiblement à un demi-cercle (180°) entre lesdites première et deuxième positions rabattues. Dans ce mode de réalisation avantageux, ladite position relevée est située sensiblement au milieu de ladite course angulaire, de sorte que ladite position relevée constitue une position intermédiaire, située à mi-course entre la première position rabattue et la deuxième position rabattue.

Comme illustré aux figures, l'organe de commande manuel 6 comprend une portion de préhension mobile destinée à être saisie et manipulée avec la main, ladite portion de préhension mobile étant formée par une pièce monobloc, d'un seul tenant. En d'autres termes, la portion de l'organe de commande 6 destinée à être manipulée se présente sous la forme d'une pièce unique, et non d'une pluralité de pièces mobiles les unes par rapport aux autres. Comme évoqué précédemment, l'organe de commande 6 est, lorsqu'il se trouve en position relevée, conçu pour être saisi manuellement afin de permettre la manipulation du couvercle 3 par l'utilisateur. Cela signifie qu'en position relevée, l'organe de commande 6 assure avantageusement un rôle et une forme de poignée permettant à l'utilisateur de manipuler, c'est-à-dire de saisir fermement et de soulever, le couvercle 3, afin de le déplacer d'un endroit à un autre, et par exemple pour le placer sur la cuve 2 ou au contraire l'enlever de la cuve 2. En d'autres termes, l'organe de commande 6 présente, dans sa position relevée, une forme et des dimensions suffisantes pour permettre une prise directe, ferme et assurée dudit organe de commande 6 par l'utilisateur, la prise ainsi procurée permettant à l'utilisateur de supporter fermement le poids du couvercle 3. A cette fin, différentes conformations de l'organe de commande 6 sont envisageables, comme par exemple une forme de boucle (variante illustrée aux figures) ou une forme en T, en L, une forme de pommeau, de bouton évasé, etc. Avantageusement, l'organe de commande 6 comprend une anse 5, c'est-à-dire une pièce arquée, en forme de boucle, avantageusement conçue pour être saisie fermement et à pleine main par l'utilisateur. L'anse 5 est avantageusement conçue pour faire saillie du couvercle 3 en position relevée, et pour être rabattue vers le couvercle 3 dans sa première et/ou sa deuxième position rabattue, comme illustré aux figures. Le recours à un organe de commande 6 en forme d'anse est particulièrement préféré, car il permet une prise particulièrement ferme et assurée par l'utilisateur tout en étant facilement escamotable. En particulier, il est avantageux que le couvercle 3 présente à sa surface un relief 7 dont la forme est de préférence sensiblement complémentaire de celle de l'espace vide délimité par l'anse 5 et destiné à recevoir les doigts de l'utilisateur. Ainsi, lorsque l'anse 5 est complètement rabattue sur le couvercle 3, parallèlement à ce dernier (dans sa première position rabattue ou sa deuxième position rabattue), ledit espace vide est au moins partiellement comblé par le relief 7, de sorte que l'anse 5 s'étend alors avantageusement dans la continuité du relief 7, limitant ainsi la possibilité pour l'utilisateur d'attraper l'anse 5 pour manipuler le couvercle 3. En d'autres termes, le couvercle 3 présente à sa surface un relief 7 conçu pour au moins partiellement combler ledit espace vide délimité par l'anse 5 lorsque cette dernière est rabattue contre le couvercle 3, limitant ainsi la possibilité pour l'utilisateur d'attraper l'anse 5 pour manipuler le couvercle 3.

De préférence, l'anse 5 présente sensiblement un contour arqué, comme illustré aux figures. Plus précisément, ladite anse 5 s'étend avantageusement selon un contour courbe, présentant un corps de préhension cintré de forme générale « en C » s'étendant entre une première extrémité 5A une deuxième extrémité 5B sensiblement traversées par ledit axe de pivotement Y-Y', lesdites première et deuxième extrémités 5A, 5B étant ainsi disposées de façon sensiblement diamétralement opposée relativement à l'axe central Y-Y'. En d'autres termes, l'anse 5 présente dans ce cas sensiblement une forme d'arche dont la taille est choisie pour permettre à l'utilisateur de glisser, dans l'orifice délimité par ladite arche et le couvercle 3, au moins deux doigts (par exemple l'index et le majeur), de préférence au moins trois doigts (index, majeur et annulaire), un espace suffisant pour permettre l'introduction de quatre doigts (index, majeur, annulaire et auriculaire) pouvant être préféré dans certaines configurations.

La structure et le fonctionnement de l'appareil 1 de cuisson d'aliments sous pression illustré aux figures vont maintenant être décrits plus en détails. Dans ce mode de réalisation, le dispositif de verrouillage/déverrouillage 4 du couvercle 3 relativement à la cuve 2 comprend deux mâchoires 4A, 4D montées à coulissement radial sur le couvercle 3, par l'intermédiaire de deux segments métalliques 4C, 4D. L'appareil 1 comprend en outre une platine 8 qui se présente en l'espèce sous la forme d'une plaque montée sur le couvercle 3, de préférence sur la face externe de ce dernier, dans une position centrale. L'appareil 1 comprend également une pièce de transmission 9 montée à coulissement sur la platine 8, selon une direction Z-Z' qui est en l'espèce perpendiculaire à la fois à l'axe vertical central X-X' et à l'axe de rotation Y-Y' de l'anse 5 formant l'organe de commande manuel 6. Des lumières de guidage allongées 10, 11 sont ménagées à travers l'épaisseur de la pièce de transmission 9, et coopèrent avec des ergots de guidage complémentaires 12, 13 issus de la platine 8 pour assurer une liaison mécanique entre la platine 8 et la pièce de transmission 9 autorisant le glissement, selon l'axe Z-Z', de la pièce transmission 9 relativement à la platine 8. Le déplacement de la pièce de transmission 9 en translation selon la direction de coulissement Z-Z' est quant à lui assuré par un système de transmission d'efforts incluant en l'espèce d'une part une crémaillère 14 qui s'étend longitudinalement selon la direction Z-Z' et d'autre part un secteur de couronne dentée 15 solidaire de l'organe de commande manuel 6, de façon à transformer le mouvement de rotation de l'organe de commande manuel 6 selon l'axe de rotation Y-Y' en un mouvement de translation de la pièce de transmission 9 selon la direction horizontale Z-Z'. Bien entendu, le recours à un système d'engrenage à crémaillère tel que celui illustré aux figures, pour transformer le mouvement de l'organe de commande manuel 6 en mouvement de la pièce transmission 9, est une option parmi d'autres, et tout autre système de transformation de mouvement adéquat pourra être utilisé. Comme évoqué précédemment, l'organe de commande manuel 6 du verrouillage/déverrouillage se présente sous la forme d'une anse 5 avec une poignée courbe qui s'étend entre deux extrémités 5A, 5B reliées par un arbre rectiligne qui porte le secteur de couronne dentée 15. Par ailleurs, comme illustré aux figures, chaque bras entraîneur 4C, 4D s'étend entre une extrémité externe attachée à une mâchoire respective 4A, 4B et une extrémité interne qui porte un pion d'entraînement respectif 40C, 40D. Chaque pion 40C, 40D se présente par exemple sous la forme d'un plot vertical cylindrique, qui s'étend majoritairement selon la direction verticale matérialisée par l'axe central X-X'. Chaque pion 40C, 40D coulisse radialement (selon la direction radiale R-R') dans une lumière longitudinale 8A, 8B respective ménagée à travers l'épaisseur de la platine 8 et s'étendant longitudinalement selon la direction radiale R-R' pour guider chaque bras entraîneur 4C, 4D en translation radiale. Ainsi, chaque bras entraîneur 4C, 4D est disposé en partie sous la platine 8, de sorte que les pions 40C, 40D portés respectivement par les bras entraîneurs 40C, 40D émergent à travers les lumières longitudinales 8A, 8B, de la platine 8. La pièce de transmission 9 est quant à elle également pourvue de lumières d'entraînement 9A, 9B qui présentent un profil sensiblement « *en V* » et sont destinés à coopérer avec respectivement les pions d'entraînement 40C, 40D pour commander le mouvement d'expansion/rétractation du dispositif de verrouillage/déverrouillage 4, par déplacement radial des bras entraîneurs 4C, 4D, sous l'effet du déplacement transversal, selon la direction Z-Z', de la pièce de transmission 9. A cette fin, les lumières d'entraînement 9A, 9B coopèrent avec les pions 40C, 40D pour transformer le mouvement de translation de la pièce de transmission 9 selon la direction Z-Z' en un mouvement de translation de chaque sous-ensemble bras entraîneur 4C, 4D / mâchoire 4A, 4B, selon une direction radiale perpendiculaire à la direction de translation de la pièce de transmission 9 et matérialisée par l'axe R-R' sur les figures annexées. Bien entendu, le sommet du V formé par chaque lumière d'entraînement 9A, 9B correspond à la position d'expansion maximale du dispositif de verrouillage/déverrouillage 4, dans laquelle l'organe de commande manuel 6 se trouve dans sa position relevée (illustré à la figure 7), tandis que les extrémités du V correspondent à la position de rétractation maximale du dispositif de verrouillage/déverrouillage 4, dans laquelle l'organe de commande manuel 6 se trouve dans sa première ou sa deuxième position rabattues (illustrées aux figures 1 et 2). Le déplacement de la pièce de transmission 9 dans un sens ou dans un autre, à partir de la position illustrée à la figure 8, conduit alors à exercer sur chaque pion 40C, 40D, au moyen des rampes inclinées formant les bras du V de chaque lumière d'entraînement 9A, 9B, un effort de rapprochement mutuel desdits pions 40C, 40D, et donc des mâchoires 4A, 4B auxquelles chacun les pions 40C, 40D sont respectivement attachés par l'intermédiaire des bras entraîneurs 4C, 4D.

Le fonctionnement de l'autocuiseur 1 illustré aux figures est ainsi par exemple le suivant. En premier lieu, l'autocuiseur 1 se trouve dans la configuration de verrouillage illustré à la figure 1, avec l'anse 5 rabattue sur le couvercle 3 et les mâchoires 4A, 4B en position de verrouillage. Afin de procéder au déverrouillage du couvercle, l'utilisateur saisit l'anse 5 et la fait pivoter manuellement (cf. figures 3 à 4) jusqu'à atteindre la position relevée illustrée à la figure 7. Le pivotement de l'organe de commande manuel 6 entre la première position rabaissée illustrée à la figure 1 et la position relevée illustrée à la figure 7 entraîne, par coopération du secteur de roue dentée 15 et de la crémaillère 14, un coulissement horizontal de la pièce de transmission 9 selon la direction Z-Z'. Ce coulissement de la pièce de transmission 9 entraîne en retour un déplacement radial centrifuge des pions 40C, 40D sous l'effet de la poussée exercée sur lesdits pions 40C, 40D par les bords des rampes inclinées formées par les lumières d'entraînement 9A, 9B (cf. figure 3). Une fois l'organe de commande 6 placé en position relevée, l'utilisateur peut à nouveau verrouiller le couvercle 3 relativement à la cuve 2 soit en rabattant l'organe de commande 6, selon la première trajectoire T1, dans la première position rabattue, selon un mouvement de pivotement dont l'amplitude (90°) est identique au mouvement de pivotement qui a conduit au déverrouillage mais de sens opposé, soit en poursuivant la course angulaire de l'organe de commande manuel 6, selon la deuxième trajectoire T2, de façon à amener l'organe de commande 6 à parcourir un secteur angulaire d'environ 90° jusqu'à atteindre la deuxième position rabattue illustrée à la figure 2. L'utilisateur peut ainsi, à partir de la position relevée, rabattre l'organe de commande 6 dans un sens ou dans un autre, ce qui aboutira au même résultat (à savoir un verrouillage du couvercle 3 relativement à la cuve 2). La position relevée verticale de l'organe de commande manuel 6, illustrée à la figure 7, est donc une position *"flottante"* qui ne marque pas la fin de la course angulaire de l'organe de commande 6 mais constitue au contraire le point de départ pour un déplacement de l'organe de commande manuel 6 susceptible de s'effectuer selon au moins deux trajectoires distinctes T1, T2, de préférence symétriquement opposées. Cette caractéristique permet en particulier de procurer un excellent niveau d'ergonomie et contribue à la simplicité d'utilisation de l'appareil 1 de cuisson d'aliments sous pression conforme à l'invention.

L'invention concerne d'ailleurs, de façon indépendante, un appareil 1 de cuisson d'aliments sous pression comprenant une cuve 2, un couvercle 3 destiné à être associé à la cuve 2, un organe de commande manuel 6 du verrouillage/déverrouillage du couvercle 3 relativement à la cuve 2, ledit organe de commande manuel 6 étant monté mobile relativement au couvercle 3 de façon à pouvoir adopter au moins une position qui correspond au déverrouillage du couvercle 3, ledit organe de commande manuel 6 étant conçu pour pouvoir se déplacer, à partir de sa position correspondant au déverrouillage, selon au moins une première et une deuxième trajectoire différentes T1, T2, qui mènent toutes deux vers une ou plusieurs positions de l'organe de commande manuel 6 correspondant au verrouillage du couvercle 3 relativement à la cuve 2.

## Revendications

1. Appareil (1) de cuisson d'aliments sous pression comprenant une cuve (2), un couvercle (3) destiné à être associé à la cuve (2), un dispositif de verrouillage/déverrouillage (4) du couvercle (3) relativement à la cuve (2) solidaire du couvercle (3) et conçu pour se déplacer relativement à ce dernier entre deux positions extrêmes, savoir une position d'expansion maximale et une position de rétractation maximale, selon un mouvement d'expansion/rétractation présentant au moins une composante radiale, et un organe de commande manuel (6) du verrouillage/déverrouillage conçu pour commander ledit mouvement d'expansion/rétractation, ledit organe de commande manuel (6) étant monté mobile relativement au couvercle (3) de façon à pouvoir adopter au moins une position relevée qui correspond au déverrouillage complet du couvercle (3) et dans laquelle l'organe de commande manuel (6) s'élève au droit du couvercle (3) et au moins une première position rabattue qui correspond au verrouillage du couvercle (3) et dans laquelle l'organe de commande manuel (6) est rabaissé vers le couvercle (3), ledit dispositif de verrouillage/déverrouillage (4) étant conçu pour se trouver dans ladite position d'expansion maximale lorsque l'organe de commande manuel (6) est dans ladite position relevée, et pour se trouver dans ladite position de rétractation maximale lorsque l'organe de commande manuel (6) est dans ladite première position rabattue, ledit appareil (1) étant **caractérisé en ce que** ledit organe de commande manuel (6) est conçu pour pouvoir se déplacer, à partir de sa position relevée, selon au moins une première et une deuxième trajectoires (T1, T2) différentes, ladite première trajectoire (T1) menant à ladite première position rabattue, ledit organe de commande manuel (6) étant monté mobile relativement au couvercle (3) de façon à pouvoir adopter, outre ladite position relevée et ladite première position rabattue, une deuxième position rabattue dans laquelle l'organe de commande manuel (6) est rabaissé vers le couvercle (3), ladite deuxième position rabattue étant différente de ladite première position rabattue, ladite deuxième trajectoire (T2) menant à ladite deuxième position rabattue qui correspond elle aussi au verrouillage du couvercle (3).

2. Appareil (1) selon la revendication 1 **caractérisé en ce que** ledit organe de commande manuel comprend une portion de préhension mobile destinée à être saisie et manipulée avec la main, ladite portion de préhension mobile étant formée par une pièce monobloc, d'un seul tenant.

3. Appareil (1) de cuisson selon la revendication 1 ou 2 **caractérisé en ce qu'**il est conçu pour que le déplacement de l'organe de commande manuel (6) de ladite position relevée jusqu'à ladite première position rabattue commande le verrouillage du couvercle (3) par rétractation du dispositif de verrouillage/déverrouillage (4) et pour que le déplacement de l'organe de commande manuel (6) de ladite première position rabattue jusqu'à ladite position relevée commande le déverrouillage du couvercle (3) par expansion du dispositif de verrouillage/déverrouillage (4).

4. Appareil (1) selon l'une des revendications 1 à 3 **caractérisé en ce que** ladite position relevée est une position stable.

5. Appareil (1) selon l'une des revendications 1 à 4 **caractérisé en ce qu'**il comprend un organe de préhension du couvercle (3) qui est attaché à ce dernier et est conçu pour être saisi manuellement afin de permettre la manipulation du couvercle (3) par son intermédiaire, ledit organe de préhension étant uniquement formé par ledit organe de commande manuel (6) en position relevée.

6. Appareil (1) selon l'une des revendications 1 à 5 **caractérisé en ce que** ledit appareil (1) est conçu pour que le déplacement de l'organe de commande manuel (6) de ladite position relevée jusqu'à ladite deuxième position rabattue commande le verrouillage du couvercle (3) par rétractation du dispositif de verrouillage/déverrouillage (4) et pour que le déplacement de l'organe de commande manuel (6) de ladite deuxième position rabattue jusqu'à ladite position relevée commande le déverrouillage du couvercle (3) par expansion du dispositif de verrouillage/déverrouillage (4).

7. Appareil (1) selon l'une des revendications 1 à 6 **caractérisé en ce que** ledit organe de commande manuel (6) est monté à pivotement relativement au couvercle (3).

8. Appareil (1) selon la revendication 7 **caractérisé en ce que** ledit organe de commande manuel (6) est monté à pivotement relativement au couvercle (3) selon un axe de pivotement (Y-Y') sensiblement horizontal.

9. Appareil (1) selon la revendication 7 ou 8 **caractérisé en ce que** lesdites première et deuxième trajectoires (T1, T2) sont des rotations de sens opposés.

10. Appareil (1) selon l'une des revendications 7 à 9 **caractérisé en ce que** ledit organe de commande manuel (6) est conçu pour pivoter selon une course angulaire correspondant sensiblement à un demi-cercle entre lesdites première et deuxième positions rabattues, ladite position relevée étant de préférence située sensiblement au milieu de ladite course angulaire.

11. Appareil (1) selon l'une des revendications 1 à 10 **caractérisé en ce que** ledit organe de commande manuel (6) comprend une anse.

12. Appareil (1) selon l'une des revendications 1 à 11 **caractérisé en ce que** ledit couvercle (3) est conçu pour être rapporté et verrouillé sur la cuve (2).

13. Appareil (1) de cuisson selon l'une des revendications 1 à 12 **caractérisé en ce que** ledit mouvement d'expansion/rétractation est majoritairement radial, de préférence sensiblement purement radial.

14. Appareil (1) selon l'une des revendications 1 à 13 **caractérisé en ce que** ledit dispositif de verrouillage/déverrouillage comprend au moins un verrou monté à translation radiale sur le couvercle (3), ledit verrou étant formé par exemple par une ou plusieurs mâchoires (4A, 4B) et/ou un ou plusieurs segments.

## Patentansprüche

1. Gerät (1) zum Kochen von Nahrungsmitteln unter Druck, umfassend einen Behälter (2), einen Deckel (3), der dazu bestimmt ist, mit dem Behälter (2) verbunden zu werden, eine Verriegelungs-/Entriegelungsvorrichtung (4) des Deckels (3) in Bezug auf den Behälter (2), die mit dem Deckel (3) fest verbunden ist und ausgelegt ist, um sich relativ zu diesem Letzteren zwischen zwei Extrempositionen, nämlich einer maximalen Ausdehnungsposition und einer maximalen Rückzugsposition zu bewegen, gemäß einer Ausdehnungs-/Rückzugsbewegung, die mindestens eine radiale Komponente aufweist, und ein manuelles Steuerelement (6) zum Verriegeln/Entriegeln, das ausgelegt ist, um die Ausdehnungs-/Rückzugsbewegung zu steuern, wobei das manuelle Steuerelement (6) relativ zu dem Deckel (3) derart beweglich angebracht ist, um mindestens eine angehobene Position, die dem vollständigen Verriegeln des Deckels (3) entspricht und in der das manuelle Steuerelement (6) im rechten Winkel zu dem Deckel (3) ansteigt, und mindestens eine erste hochgeklappte Position einnehmen zu können, die dem Verriegeln des Deckels (3) entspricht und in der das manuelle Steuerelement (6) zu dem Deckel (3) hin abgesenkt ist, wobei die Verriegelungs-/Entriegelungsvorrichtung (4) ausgebildet ist, um sich in der maximalen Ausdehnungsposition zu befinden, wenn das manuelle Steuerelement (6) in der angehobenen Position ist, und um sich in der maximalen Rückzugsposition zu befinden, wenn das manuelle Steuerelement (6) in der ersten hochgeklappten Position ist, wobei das Gerät (1) **dadurch gekennzeichnet ist, dass** das manuelle Steuerelement (6) ausgelegt ist, um sich ausgehend von seiner angehobenen Position entlang mindestens einer ersten und einer zweiten unterschiedlichen Trajektorie (T1, T2), bewegen zu können, wobei die erste Trajektorie (T1) zu der ersten hochgeklappten Position führt, wobei das manuelle Steuerelement (6) relativ zu dem Deckel (3) derart beweglich angebracht ist, um neben der angehobenen Position und der ersten hochgeklappten Position eine zweite hochgeklappte Position einnehmen zu können, in der das manuelle Steuerelement (6) zum Deckel (3) hin abgesenkt ist, wobei sich die zweite hochgeklappte Position von der ersten hochgeklappten Position unterscheidet, wobei die zweite Trajektorie (T2) zu der zweiten hochgeklappten Position führt, die auch dem Verriegeln des Deckels (3) entspricht.

2. Gerät (1) nach Anspruch 1, **dadurch gekennzeichnet, dass** das manuelle Steuerelement einen beweglichen Greifabschnitt aufweist, der dazu bestimmt ist, mit der Hand gegriffen und bedient zu werden, wobei der bewegliche Greifabschnitt aus einem einzigen Stück einteilig gebildet ist.

3. Kochgerät (1) nach Anspruch 1 oder 2, **dadurch gekennzeichnet, dass** es ausgelegt ist, um durch das Bewegen des manuellen Steuerelements (6) von der angehobenen Position bis zu der ersten hochgeklappten Position das Verriegeln des Deckels (3) durch Zurückziehen der Verriegelungs-/Entriegelungsvorrichtung (4) zu steuern und um durch das Bewegen des manuellen Steuerelements (6) von der ersten hochgeklappten Position bis zu der angehobenen Position das Verriegeln des Deckels (3) durch Ausdehnen der Verriegelungs-/Entriegelungsvorrichtung (4) zu steuern.

4. Gerät (1) nach einem der Ansprüche 1 bis 3, **dadurch gekennzeichnet, dass** die angehobene Position eine stabile Position ist.

5. Gerät (1) nach einem der Ansprüche 1 bis 4, **dadurch gekennzeichnet, dass** es ein Element zum Greifen des Deckels (3) aufweist, das an diesem Letzteren angebracht ist und ausgelegt ist, um manuell gegriffen zu werden, um das Handhaben des Deckels (3) durch es zu ermöglichen, wobei das Greifelement nur durch das manuelle Steuerelement (6) in angehobener Position gebildet ist.

6. Gerät (1) nach einem der Ansprüche 1 bis 5, **dadurch gekennzeichnet, dass** das Gerät (1) ausgelegt ist, um durch das Bewegen des manuellen Steuerelements (6) von der angehobenen Position bis zu der zweiten hochgeklappten Position das Verriegeln des Deckels (3) durch Zurückziehen der Verriegelungs-/Entriegelungsvorrichtung (4) zu steuern und um durch das Bewegen des manuellen Steuerelements (6) von der zweiten hochgeklappten Position bis zu der angehobenen Position das Entriegeln des Deckels (3) durch Ausdehnen der Verriegelungs-/Entriegelungsvorrichtung (4) zu steuern.

7. Gerät (1) nach einem der Ansprüche 1 bis 6, **dadurch gekennzeichnet, dass** das manuelle Steuerelement (6) schwenkbar in Bezug auf den Deckel (3) befestigt ist.

8. Gerät (1) nach Anspruch 7, **dadurch gekennzeichnet, dass** das manuelle Steuerelement (6) schwenkbar in Bezug auf den Deckel (3) entlang einer im Wesentlichen horizontalen Schwenkachse (Y-Y') befestigt ist.

9. Gerät (1) nach Anspruch 7 oder 8, **dadurch gekennzeichnet, dass** die erste und die zweite Trajektorie (T1, T2) Rotationen in entgegengesetzten Richtungen sind.

10. Gerät (1) nach einem der Ansprüche 7 bis 9, **dadurch gekennzeichnet, dass** das manuelle Steuerelement (6) ausgelegt ist, um entlang eines bogenförmigen Pfads zu schwenken, der im Wesentlichen einem Halbkreis zwischen der ersten und der zweiten hochgeklappten Position entspricht, wobei sich die angehobene Position vorzugsweise im Wesentlichen in der Mitte des bogenförmigen Pfads befindet.

11. Gerät (1) nach einem der Ansprüche 1 bis 10, **dadurch gekennzeichnet, dass** das manuelle Steuerelement (6) eine Einbuchtung aufweist.

12. Gerät (1) nach einem der Ansprüche 1 bis 11, **dadurch gekennzeichnet, dass** der Deckel (3) ausgelegt ist, um auf dem Behälter (2) angebracht und verriegelt zu werden.

13. Kochgerät (1) nach einem der Ansprüche 1 bis 12, **dadurch gekennzeichnet, dass** die Ausdehnungs-/Rückzugsbewegung überwiegend radial, vorzugsweise im Wesentlichen rein radial ist.

14. Gerät (1) nach einem der Ansprüche 1 bis 13, **dadurch gekennzeichnet, dass** die Verriegelungs-/Entriegelungsvorrichtung mindestens einen Riegel aufweist, der in radialer Translation auf dem Deckel (3) befestigt ist, wobei der Riegel beispielsweise aus einer oder mehreren Backen (4A, 4B) und/oder einem oder mehreren Segmenten gebildet ist.

## Claims

1. A food pressure cooking appliance (1) comprising a bowl (2), a lid (3) intended to be associated with the bowl (2), a device (4) for locking / unlocking the lid (3) relative to the bowl (2), which is integral with the lid (3) and adapted to move relative to the latter between two extreme positions, i.e. a maximum extension position and a maximum retraction position, according to an extension / retraction movement having at least one radial component, and a manual locking / unlocking control member (6) adapted to control said extension / retraction movement, said manual control member (6) being mounted mobile relative to the lid (3) so as to be able to take at least one lifted position that corresponds to the full unlocking of the lid (3) and in which the manual control member (6) rises right above the lid (3) and at least one first pulled-down position that corresponds to the locking of the lid (3) and in which the manual control member (6) is lowered towards the lid (3), said locking / unlocking device (4) being adapted to be in said maximum extension position when the manual control member (6) is in said lifted position, and to be in said maximum retraction position when the manual control member (6) is in said first pulled-down position, said appliance (1) being **characterized in that** said manual control member (6) is adapted to be able to move, from its lifted position, following a first and a second trajectories (T1, T2), different from each other, said first trajectory (T1) leading to said first pulled-down position, said manual control member (6) being mounted mobile relative to the lid (3) as to be able to take, in addition to said lifted position and said first pulled-down position, a second pulled-down position in which the manual control member (6) is pulled down towards the lid (3), said second pulled-down position being different of said first pulled-down position, said second trajectory (T2) leading to said second pulled-down position which also corresponds to the locking of the lid (3).

2. The appliance (1) according to claim 1 **characterized in that** said manual control member comprises a mobile gripping portion intended to be manually grasped and handled, said mobile gripping portion being formed by an integral single-piece part.

3. The cooking appliance (1) according to claim 1 or 2 **characterized in that** it is designed so that the displacement of the manual control member (6) from said lifted position to said first pulled-down position controls the locking of the lid (3) by retraction of the locking / unlocking device (4) and so that the displacement of the manual control member (6) from said first pulled-down position to said lifted position controls the unlocking of the lid (3) by extension of the locking / unlocking device (4).

4. The appliance (1) according to one of claims 1 to 3 **characterized in that** said lifted position is a stable position.

5. The appliance (1) according to one of claims 1 to 4 **characterized in that** it comprises a member for gripping the lid (3), which is attached to the latter and adapted to be manually grasped so as to allow the handling of the lid (3) through it, said gripping member being only formed by said manual control member (6) in the lifted position.

6. The appliance (1) according to one claim 5 **characterized in that** said appliance (1) is designed so that the displacement of the manual control member (6) from said lifted position to said first pulled-down position controls the locking of the lid (3) by retraction of the locking / unlocking device (4) and so that the displacement of the manual control member (6) from said second pulled-down position to said lifted position controls the unlocking of the lid (3) by extension of the locking / unlocking device (4).

7. The appliance (1) according to one of claims 1 to 6 **characterized in that** said manual control member (6) is mounted pivotally with respect to the lid (3).

8. The appliance (1) according to claim 7 **characterized in that** said manual control member (6) is mounted pivotally with respect to the lid (3) according to a substantially horizontal pivoting axis (Y-Y').

9. The appliance (1) according to claim 7 or 8 **characterized in that** said first and second trajectories (T1, T2) are rotations in opposite directions.

10. The appliance (1) according to one of claims 7 to 9 **characterized in that** said manual control member (6) is adapted to pivot according to an angular stroke essentially corresponding to half a circle between said first and second pulled-down positions, said lifted position being preferably substantially located in the middle of said angular stroke.

11. The appliance (1) according to one of claims 1 to 10 **characterized in that** said manual control member (6) comprises a handle.

12. The appliance (1) according to one of claims 1 to 11 **characterized in that** said lid (3) is adapted to be added and locked to the bowl (2).

13. The cooking appliance (1) according to one of claims 1 to 12 **characterized in that** said extension / retraction movement is predominantly radial, preferably substantially purely radial.

14. The appliance (1) according to one of claims 1 to 13 **characterized in that** said locking / unlocking device comprises at least one lock mounted in radial translation on the lid (3), said lock being formed for example by one or several jaws (4A, 4B) and/or one or several segments.
